# EUROPÄISCHE PATENTSCHRIFT

(11) **EP 3 283 793 B1**
(45) Veröffentlichungstag und Bekanntmachung des Hinweises auf die Patenterteilung: **18.08.2021**
(21) Anmeldenummer: 16709700.5
(22) Anmeldetag: 07.03.2016
(51) Int. Cl.: F16H 57/04, F16H 57/02, F16H 57/029, F16H 57/031

(54) **GETRIEBE, AUFWEISEND EINE WELLE, EIN FLANSCHTEIL UND EIN GEHÄUSETEIL**
TRANSMISSION HAVING A SHAFT, A FLANGED PART, AND A HOUSING PART
TRANSMISSION COMPRENANT UN ARBRE, UNE PARTIE FORMANT BRIDE ET UNE PARTIE FORMANT BOÎTIER

(30) Priorität: 13.04.2015 DE 102015004509; 01.09.2015 DE 102015011163
(43) Veröffentlichungstag der Anmeldung: 21.02.2018
(73) Patentinhaber: SEW-EURODRIVE GmbH & Co. KG, 76646 Bruchsal (DE)
(72) Erfinder: SCHWAN, Tobias, 69168 Wiesloch (DE); BARTON, Peter, 75015 Bretten (DE); KNITTEL, Jan, 76706 Dettenheim (DE); ELLER, Peter, 76676 Graben-Neudorf (DE)
(86) Internationale Anmeldenummer: PCT/EP2016/000400
(87) Internationale Veröffentlichungsnummer: WO 2016/165802

(56) Entgegenhaltungen:
- DE-B- 1 298 819
- US-A- 2 756 614
- US-A- 3 417 636

## Beschreibung

Die Erfindung betrifft ein Getriebe, aufweisend eine Welle, ein Flanschteil und ein Gehäuseteil.

Es ist allgemein bekannt, dass Lüfter zum Kühlen von Vorrichtungen verwendbar sind.

Aus der US 3417 636 A ist als nächstliegender Stand der Technik ein Getriebe bekannt, dessen Gehäuseteil Kühlrippen aufweist.

Aus der DE 12 98 819 B ist eine Kühlvorrichtung für Umlaufrädergetriebe bekannt.

### Aus der US 2 756 614 A ist eine Getriebeeinheit mit Kühlrippen bekannt.

Der Erfindung liegt daher die Aufgabe zugrunde, ein Getriebe, aufweisend eine Welle, ein Flanschteil und ein Gehäuseteil weiterzubilden, wobei ein effektives Entwärmen und eine einfache Bedienung ausführbar sein sollen.

Erfindungsgemäß wird die Aufgabe bei dem Getriebe nach den in Anspruch 1 angegebenen Merkmalen gelöst.

Wichtige Merkmale der Erfindung bei dem Getriebe, aufweisend eine Welle, insbesondere eine eintreibende Welle, ein Flanschteil und ein Gehäuseteil, sind, dass die eintreibende Welle mittels Lager im Gehäuseteil gelagert ist,
wobei ein Lüfter mit der Welle drehfest verbunden ist,
wobei das Gehäuseteil Kühlrippen aufweist, insbesondere welche sich in axialer Richtung, also Achsrichtung der Welle, erstrecken,
wobei die Kühlrippen gestuft ausgeführt sind,
wobei das Flanschteil den gestuften Bereich der Kühlrippen umgibt, insbesondere gehäusebildend umgibt.

Von Vorteil ist dabei, dass ein wohldefiniertes Aufsetzen des Flanschteils auf das Gehäuseteil ausführbar ist. Außerdem ist der vom Lüfter geförderte Luftstrom zwischen den Kühlrippen und dem Flanschteil hindurchleitbar. Somit ist eine verbesserte Kühlung des Gehäuseteils erreichbar. Des Weiteren ist ein integrierter Eingriffsschutz realisierbar, indem das Flanschteil den abgesetzten Bereich der Kühlrippen überdeckt und somit ein Berühren von drehbar gelagerten Teilen verhinderbar ist.

Bei einer vorteilhaften Ausgestaltung strömt der vom Lüfter geförderte Luftstrom zwischen dem Flanschteil und den Kühlrippen hindurch. Von Vorteil ist dabei, dass jeweilige Kanäle gebildet sind, welche jeweils von Kühlrippen und dem Gehäuseteil sowie dem Flanschteil begrenzt sind. Der austretende Luftstrom wird somit gerichtet auf das Gehäuseteil und entwärmt dieses somit effektiv. Vorteiligerweise leiten die Kühlrippen diesen austretenden Luftstrom entlang dem Gehäuse.

Bei einer vorteilhaften Ausgestaltung weist das Flanschteil an seiner Außenfläche eine Ausnehmung auf, durch welche der Luftstrom eintritt. Von Vorteil ist dabei, dass die angesaugte Luft radial eintritt und somit der Lüfter als Axiallüfter ausführbar ist.
Bei einer vorteilhaften Ausgestaltung ist die Ausnehmung mit einem Lochblech verschlossen, das mit dem Flanschteil verbunden ist, insbesondere schraubverbunden,
insbesondere wobei der Durchmesser der Löcher kleiner als der Durchmesser eines menschlichen Fingers ist. Von Vorteil ist dabei, dass ein Eingriffsschutz realisiert ist.

Bei einer vorteilhaften Ausgestaltung überlappt der vom Flanschteil überdeckte axiale Bereich mit dem von den Kühlrippen überdeckten axialen Bereich, insbesondere wobei der Überlappungsbereich weiter ausgedehnt ist als die Länge eines menschlichen Fingers. Von Vorteil ist dabei, dass das Flanschteil einen einer Schurze ähnlichen Bereich hat, welcher den abgesetzten Bereich der Kühlrippen umgibt und somit Luftkanäle begrenzt, wobei das Flanschteil in axialer Richtung glatt anschließt an die Kühlrippen des Gehäuses.

Erfindungsgemäß ist jeder Kühlrippe, die am Gehäuseteil angeordnet ist und deren überdeckter Radialabstandsbereich mit dem von dem Flanschteil überdeckten Radialabstandsbereich überlappt, eine am Flanschteil angeordnete Erhebung zugeordnet, insbesondere eineindeutig zugeordnet, wobei die jeweilige Erhebung an derselben Umfangswinkelposition angeordnet ist wie die jeweils zugeordnete Kühlrippe. Von Vorteil ist dabei, dass ein glatter Übergang vom Flanschteil zum Gehäuseteil in axialer Richtung ausgeführt ist und somit auch die Verletzungsgefahr reduziert ist.

Bei einer vorteilhaften Ausgestaltung ist die jeweilige Erhebung als Kühlrippe ausgeführt, insbesondere am Flanschteil ausgeformt ist. Von Vorteil ist dabei, dass die Entwärmung verbessert ist.

Bei einer vorteilhaften Ausgestaltung ist am Flanschteil ein Anschlussmittel, insbesondere Schmiernippel, befestigt,
wobei am Gehäuseteil eine Rohrleitung befestigt ist. Von Vorteil ist dabei, dass ein Schmierfett in einfacher Weise zuführbar ist und die Schmiermittelzufuhr am Flanschteil ausführbar ist, obwohl das zu schmierende Lager vom Gehäuseteil aufgenommen ist.

Bei einer vorteilhaften Ausgestaltung ist das Flanschteil auf die Stufe aufgesetzt angeordnet. Von Vorteil ist dabei, dass eine einfache Ausrichtung und Zentrierung des Flanschteils ausführbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein erfindungsgemäßes Getriebe mit Flanschteil 4 in Schrägansicht dargestellt.

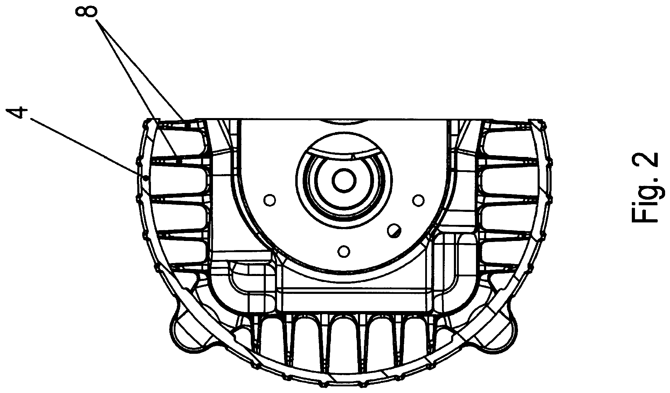

In der Figur 2 ist ein Querschnitt durch das Flanschteil 4 gezeigt.

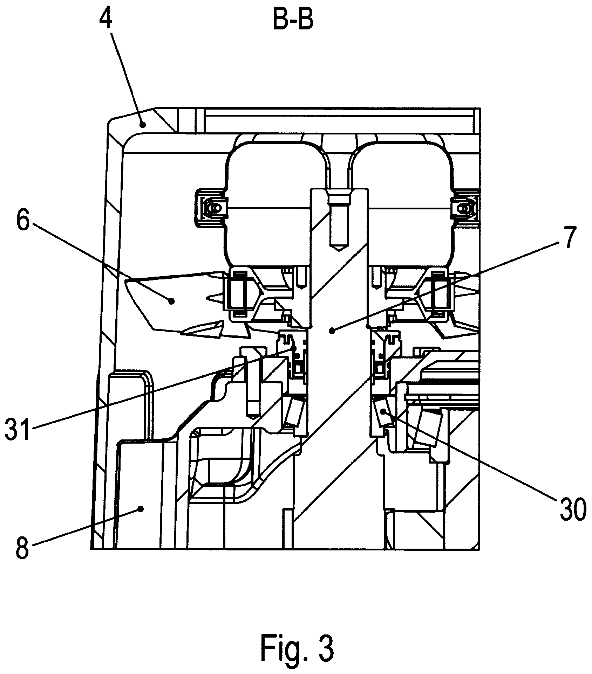

In der Figur 3 ist ein vergrößerter Ausschnitt eines Längsschnitts durch das Flanschteil 4 gezeigt.
In der Figur 4 ist eine Schrägansicht auf das explodierte Getriebe dargestellt.

Wie in den Figuren gezeigt, weist das erfindungsgemäße Getriebe ein Gehäuseteil 10 auf, das mit einem Flanschteil 4 schraubverbunden ist.

Das Flanschteil 4 ist im Wesentlichen hohlzylindrisch ausgeführt und umgibt die eintreibende Welle 7 und einen mit ihr drehfest verbundenen Lüfter 6.

Am ersten axialen, also in Achsrichtung der eintreibenden Welle 7 gesehenen, Ende des Flanschteils 4 ist dieses mit dem Gehäuseteil 10 verbunden. Am anderen axialen Ende des Flanschteils 4 ist ein Adapter schraubverbindbar oder ein Elektromotor. Für diese Schraubverbindung weist das Flanschteil 4 Bohrungen 5 auf, die in Umfangsrichtung regelmäßig voneinander beabstandet sind und auf dem jeweils gleichen Radialabstand angeordnet sind.

Das Gehäuseteil 10 weise Kühlrippen 8 auf, welche in axialer Richtung sich erstrecken und abgesetzt ausgeführt sind, also der Verlauf des größten Radialabstands der Kühlrippen 8 in axialer Richtung stufenförmig ist.

Das Flanschteil 4 sitzt mit seinem ersten axialen Ende auf dieser so gebildeten Stufe beziehungsweise auf dem so gebildeten Absatz auf.

Jeder axial sich erstreckenden Kühlrippe 8 des Gehäuseteils 10, welche im von dem Flanschteil 4 überdeckten Radialabstandsbereich angeordnet ist oder mit diesem überlappt, ist jeweils eine Erhebung 9 zugeordnet, die in derselben Umfangswinkelposition angeordnet ist wie die jeweils zugeordnete Kühlrippe 8. Der von der jeweiligen Erhebung 9 überdeckte Radialabstandsbereich überlappt mit dem von der zugeordneten Kühlrippe 8 jeweils überdeckte Radialabstandsbereich oder ist von diesem umfasst.

Die Erhebungen 9 erstrecken sich ebenfalls in axialer Richtung, sind also parallel oder sogar koaxial ausgerichtet zu den jeweiligen Kühlrippen 8.

An seiner Außenfläche weist das Flanschteil 4 eine Ausnehmung auf, die mittels eines Lochblechs 3 bedeckt ist. Somit ist der Lüfter als Axiallüfter ausführbar, welcher die Luft aus radialer Richtung kommend ansaugt und dann in axialer Richtung in die Zwischenräume zwischen des Kühlrippen 8 fördert.

Somit wird die Luft seitlich angesaugt und in axialer Richtung parallel zur Erstreckungsrichtung der Kühlrippen 8 gefördert. Auf diese Weise ist ein effektives Kühlen des Gehäuseteils 10 ermöglicht. Aber auch das Flanschteil 4 wird durch die Erhebungen 9 entwärmt.

Die eintreibende Welle 7 ist mittels Lager 30 im Gehäuseteil 10 gelagert und mittels einer berührungslosen Dichtung 31, insbesondere Labyrinthdichtung, abgedichtet. Allerdings ist diese Dichtung 31 zu schmieren, insbesondere mit Schmierfett.

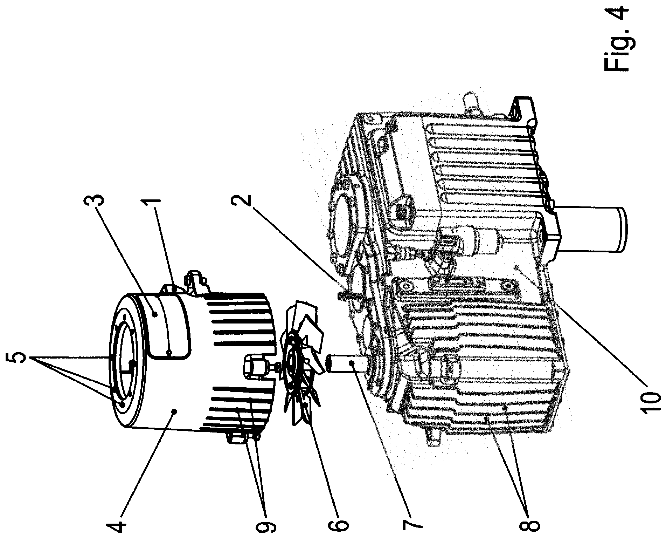

Wie in Figur 4 gezeigt, ist hierzu eine Rohrleitung am Gehäuseteil 10 befestigt, welche zur Dichtung 31 führt.

An einem radial hervorkragenden Erkerabschnitt des Flanschteils 4 ist ein Anschlussmittel 1, insbesondere Schmiernippel, angeordnet.

Vor Montage des Getriebes ist also das Anschlussmittel 1 vorkomplettiert am Flanschteil 4 angeordnet und mit diesem verbunden; die Rohrleitung 2 ist mit dem Gehäuseteil 10 vorkomplettiert und verbunden.

Bei Montage des Getriebes wird das Flanschteil 4 aufgesetzt auf das Gehäuseteil 10, wobei das Flanschteil 4 am Absatz der Kühlrippen zum Anliegen kommen kann. Bei diesem Aufsetzen wird auch das Anschlussmittel 1mit der Rohrleitung dicht verbunden.

Somit ist dann das Schmierfett für die berührungslose Dichtung am Flanschteil 4 hinzuführbar, obwohl die Rohrleitung 2 am Gehäuseteil 10 befestigt ist.

Nach Aufsetzen des Flanschteils 4 auf den Absatz der Kühlrippen 8 umgibt das Flanschteil 4 den abgesetzten Bereich der Kühlrippen 8. Der vom Lüfter geförderte Luftstrom fließt dabei zwischen den Kühlrippen 8 und dem Flanschteil 4 hindurch. Der von dem Flanschteil 4 überdeckte axiale Bereich überlappt mit dem von den Kühlrippen 8 überdeckten axialen Bereich. Dabei ist der Überlappungsbereich in axialer Richtung weiter ausgedehnt als ein menschlicher Finger. Auf diese Weise wird verhindert, dass von außen drehende Teile durch einen Menschen berührbar sind.

Der aus dem Zwischenraum zwischen Flanschteil 4 und Kühlrippen 8 austretende Luftstrom wird weiter entlang am Gehäuseteil 10 geführt, insbesondere zwischen den Kühlrippen 8 in axialer Richtung entlang. Somit ist ein effektives Kühlen des Gehäuseteils 10 ausführbar.

Im Gehäuseteil 10 sind weitere Wellen, insbesondere auch die Abtriebswelle, gelagert. Die eintreibende Welle 7 ist mit einem Verzahnungsteil drehfest verbunden. Ebenso sind auch die weiteren Wellen jeweils mit zumindest einem Verzahnungsteil drehfest verbunden. Die im Eingriff stehenden Verzahnungsteile sind mittels Schmieröl geschmiert.

Das Lochblech 3 ist mit derart kleinen Löchern ausgeführt, dass kein menschlicher Finger hindurchführbar ist.

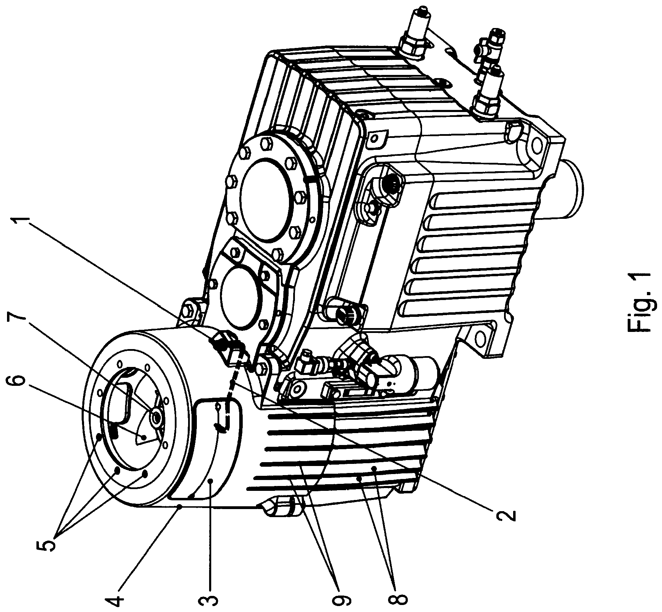

Nach Anbau des Adapters und/oder des Motors mittels Vorsehen von schrauben in den Bohrungen 5 ist die in Figur 1 nach oben geöffnete Ausnehmung des Flanschteils 4 verschlossen.

Unter menschlichem Finger wird hierbei stets ein Finger mit den in einer Norm angegebenen Maßen verstanden.

Die Rohrleitung 2 ist vorzugsweise aus einem biegbaren Material, wie Kupfer oder Stahl, ausführbar.

Das Lochblech 3 ist vorzugsweise aus Stahlblech als Stanz-Biegeteil gefertigt.

Das Flanschteil 4, insbesondere Laternenflansch, ist vorzugsweise aus Stahl gefertigt. Das Gehäuseteil 10 ist vorzugsweise aus Stahl oder Stahlguss hergestellt. Dabei ist auch eine mehrteilige Ausführung vorteilhaft, wenn die jeweiligen Einzelteile dicht miteinander verbunden sind. Alternativ ist das gehäuseteil 10 einteilig hergestellt, so dass der Aufwand für Dichtungen verringert ist, aber die Ausformung des Gehäuses 10 dann weniger komplex sein darf.

### Bezugszeichenliste

- 1: Anschlussmittel, insbesondere Schmiernippel
- 2: Rohrleitung
- 3: Lochblech
- 4: Flanschteil, insbesondere Laternenflansch
- 5: Bohrungen
- 6: Lüfter
- 7: eintreibende Welle
- 8: Kühlrippen
- 9: Erhebungen, insbesondere Kühlrippen
- 10: Gehäuseteil
- 30: Lager
- 31: berührungslose Dichtung, insbesondere Labyrinthdichtung

## Patentansprüche

1. Getriebe, aufweisend eine eintreibende Welle (7) ein Flanschteil (4) und ein Gehäuseteil (10), das mit dem Flanschteil (4) schraubverbunden ist,
wobei die eintreibende Welle (7) mittels Lager (30) im Gehäuseteil (10) gelagert ist,
wobei ein Lüfter (6) mit der Welle (7) drehfest verbunden ist,
wobei das Gehäuseteil (10) Kühlrippen (8) aufweist, insbesondere welche sich in axialer Richtung, also Achsrichtung der Welle (7), erstrecken,
wobei die Kühlrippen (8) gestuft ausgeführt sind,
wobei das Flanschteil (4) den gestuften Bereich der Kühlrippen (8) umgibt, insbesondere gehäusebildend umgibt,
**dadurch gekennzeichnet, dass**
jeder Kühlrippe (8), die am Gehäuseteil (10) angeordnet ist und deren überdeckter Radialabstandsbereich mit dem von dem Flanschteil (4) überdeckten Radialabstandsbereich überlappt, eine am Flanschteil (4) angeordnete Erhebung (9) zugeordnet ist, insbesondere eineindeutig zugeordnet ist,
wobei die jeweilige Erhebung (9) an derselben Umfangswinkelposition angeordnet ist wie die jeweils zugeordnete Kühlrippe (8).

2. Getriebe nach Anspruch 1,
**dadurch gekennzeichnet, dass**
der vom Lüfter (6) geförderte Luftstrom zwischen dem Flanschteil (4) und den Kühlrippen (8) hindurchströmt.

3. Getriebe nach mindestens einem der vorangegangenen Ansprüche,
**dadurch gekennzeichnet, dass**
das Flanschteil (4) an seiner Außenfläche eine Ausnehmung aufweist, durch welche der Luftstrom eintritt.

4. Getriebe nach mindestens einem der vorangegangenen Ansprüche,
**dadurch gekennzeichnet, dass**
die Ausnehmung mit einem Lochblech (3) verschlossen ist, das mit dem Flanschteil (4) verbunden ist, insbesondere schraubverbunden,
insbesondere wobei der Durchmesser der Löcher kleiner als der Durchmesser eines menschlichen Fingers ist.

5. Getriebe nach mindestens einem der vorangegangenen Ansprüche,
**dadurch gekennzeichnet, dass**
der vom Flanschteil (4) überdeckte axiale Bereich mit dem von den Kühlrippen (8) überdeckten axialen Bereich überlappt,
insbesondere wobei der Überlappungsbereich weiter ausgedehnt ist als die Länge eines menschlichen Fingers.

6. Getriebe nach mindestens einem der vorangegangenen Ansprüche,
**dadurch gekennzeichnet, dass**
die jeweilige Erhebung als Kühlrippe ausgeführt ist, insbesondere am Flanschteil (4) ausgeformt ist.

7. Getriebe nach mindestens einem der vorangegangenen Ansprüche,
**dadurch gekennzeichnet, dass**
am Flanschteil (4) ein Anschlussmittel (1), insbesondere Schmiernippel, befestigt ist,
wobei am Gehäuseteil (10) eine Rohrleitung (2) befestigt ist.

8. Getriebe nach mindestens einem der vorangegangenen Ansprüche,
**dadurch gekennzeichnet, dass**
das Flanschteil (4) auf die Stufe aufgesetzt angeordnet ist.

## Claims

1. A gear unit, having an input shaft (7), a flange part (4) and a housing part (10) which is screw-connected to the flange part (4),
wherein the input shaft (7) is mounted in the housing part (10) by means of bearings (30),
wherein a fan (6) is connected non-rotatably to the shaft (7),
wherein the housing part (10) has cooling fins (8), in particular which extend in the axial direction, i.e. the axis direction of the shaft (7),
wherein the cooling fins (8) are embodied in a stepped manner,
wherein the flange part (4) surrounds the stepped region of the cooling fins (8), in particular surrounds it in a housing-forming manner,
**characterised in that**
with each cooling fin (8) which is arranged on the housing part (10) and the covered radial distance region of which overlaps with the radial distance region covered by the flange part (4)
there is associated, in particular is associated one-to-one, an elevation (9) arranged on the flange part (4),
the respective elevation (9) being arranged at the same angle-at-circumference position as the cooling fin (8) which is associated in each case.

2. A gear unit according to claim 1,
**characterised in that**
the air flow conveyed by the fan (6) flows through between the flange part (4) and the cooling fins (8).

3. A gear unit according to at least one of the preceding claims,
**characterised in that**
the flange part (4) has on its outer surface a cutout through which the air flow enters.

4. A gear unit according to at least one of the preceding claims,
**characterised in that**
the cutout is closed with a perforated plate (3) which is connected, in particular screw-connected, to the flange part (4),
in particular wherein the diameter of the holes is smaller than the diameter of a human finger.

5. A gear unit according to at least one of the preceding claims,
**characterised in that**
the axial region covered by the flange part (4) overlaps with the axial region covered by the cooling fins (8),
in particular with the region of overlap being further extended than the length of a human finger.

6. A gear unit according to at least one of the preceding claims,
**characterised in that**
the respective elevation is embodied as a cooling fin, in particular is formed on the flange part (4).

7. A gear unit according to at least one of the preceding claims,
**characterised in that**
a connection means (1), in particular lubricating nipple, is fastened to the flange part (4),
with a tube (2) being fastened to the housing part (10).

8. A gear unit according to at least one of the preceding claims,
**characterised in that**
the flange part (4) is arranged placed on the step.

## Revendications

1. Transmission, comprenant un arbre d'entraînement d'entrée (7), une partie formant bride (4) et une partie formant boîtier (10), qui est reliée par vissage à la partie formant bride (4),
l'arbre d'entraînement d'entrée (7) étant monté dans la partie formant boîtier (10) au moyen de paliers (30),
un ventilateur (6) étant relié à l'arbre (7) de manière solidaire en rotation,
la partie formant boîtier (10) comprenant des nervures de refroidissement (8), lesquelles s'étendent en particulier dans la direction axiale, c'est-à-dire dans la direction de l'axe de l'arbre (7),
les nervures de refroidissement (8) étant réalisées de manière étagée,
la partie formant bride (4) entourant la région étagée des nervures de refroidissement (8), en particulier l'entourant de manière à former un boîtier,
**caractérisée en ce**
**qu'**un rehaussement (9) disposé sur la partie formant bride (4) est associé, en particulier de manière univoque, à chaque nervure de refroidissement (8) qui est disposée sur la partie formant boîtier (10) et dont la région d'espacement radial recouverte chevauche la région d'espacement radial recouverte par la partie formant bride (4),
le rehaussement (9) respectif étant disposé à la même position angulaire périphérique que la nervure de refroidissement (8) respectivement associée.

2. Transmission selon la revendication 1,
**caractérisée en ce que**
le flux d'air refoulé par le ventilateur (6) s'écoule entre la partie formant bride (4) et les nervures de refroidissement (8).

3. Transmission selon au moins l'une des revendications précédentes,
**caractérisée en ce que**
la partie formant bride (4) comprend sur sa surface extérieure un évidement à travers lequel le flux d'air entre.

4. Transmission selon au moins l'une des revendications précédentes,
**caractérisée en ce que**
l'évidement est fermé par une tôle perforée (3) qui est reliée à la partie formant bride (4), en particulier vissée sur celle-ci,
le diamètre des trous étant en particulier inférieur au diamètre d'un doigt d'une personne.

5. Transmission selon au moins l'une des revendications précédentes,
**caractérisée en ce que**
la région axiale recouverte par la partie formant bride (4) chevauche la région axiale recouverte par les nervures de refroidissement (8),
la région de chevauchement étant en particulier plus étendue que la longueur d'un doigt d'une personne.

6. Transmission selon au moins l'une des revendications précédentes,
**caractérisée en ce que**
le rehaussement respectif est réalisé sous forme de nervure de refroidissement, en particulier formé sur la partie formant bride (4).

7. Transmission selon au moins l'une des revendications précédentes,
**caractérisée en ce**
**qu'**un moyen de raccordement (1), en particulier un raccord fileté de graissage, est fixé à la partie formant bride (4),
une conduite tubulaire (2) étant fixée à la partie formant boîtier (10).

8. Transmission selon au moins l'une des revendications précédentes,
**caractérisée en ce que**
la partie formant bride (4) est disposée de manière placée sur l'étage.
